# DEMANDE DE BREVET EUROPEEN

(11) **EP 2 746 993 A1**
(43) Date de publication de la demande: **25.06.2014**
(21) Numéro de dépôt: 12306662.3
(22) Date de dépôt: 21.12.2012
(51) Int. Cl.: G06K 19/06, G06K 19/07, G06K 19/08

(54) **Procédé de configuration d'une carte à puce (s) pour une unique application sélectionnée**

(71) Demandeur: Gemalto SA, 92190 Meudon (FR)
(72) Inventeur: Barbre, Serge, 92190 Meudon (FR); Spyropoulos, Evangelos, 92190 Meudon (FR); Thill, Michel, 92190 Meudon (FR)
(74) Mandataire: Cour, Pierre

(57) **Abrégé**

Un procédé est destiné à configurer une carte à puce (CP) comprenant une puce électronique (PE) pouvant participer à au moins deux applications, une piste magnétique (PM) pouvant stocker des informations, des moyens d'action (MA) propres à agir sur la piste magnétique (PM) pour modifier certaines informations stockées, des circuit de contrôle (MC) propres à contrôler la puce électronique (PE) et les moyens d'action (MA), et des moyens de sélection (MS) propres à permettre la sélection d'une application. Ce procédé comprend une étape dans laquelle, en cas de sélection de l'une des applications, on stocke une information dédiée représentative de cette application sélectionnée dans un endroit qui est accessible au circuit de contrôle (MC), de sorte qu'en cas de réveil de la puce électronique (PE) cette dernière (PE) récupère automatiquement cette information dédiée afin d'activer l'application sélectionnée qu'elle représente.

## Description

### Domaine technique de l'invention

L'invention concerne les cartes à puce(s), et plus précisément la configuration de telles cartes à puce(s).

On entend ici par « cartes à puce(s) » une carte en matière plastique ou synthétique et comprenant au moins une puce électronique accessible par un lecteur externe avec ou sans contact et propre à participer à au moins deux applications (éventuellement de type sécuritaire), au moins une piste magnétique accessible par un lecteur magnétique et propre à stocker potentiellement ces mêmes applications, des moyens d'action (généralement de type électromagnétique) propres à agir sur la piste magnétique afin qu'elle stocke l'une des applications

Par ailleurs, toute application est ici concernée, dès lors qu'elle nécessite l'exécution d'opérations et/ou de fonctions par au moins une puce électronique. Ainsi, il pourra par exemple s'agir d'une application de crédit, de débit ou de prépaiement.

### Etat de l'art

Comme le sait l'homme de l'art, il a été proposé depuis fort longtemps d'utiliser une piste magnétique ou une puce électronique pour stocker des informations nécessaires à l'exécution d'applications sur un medium physique (ou support) de petites dimensions. De ce fait, selon les pays, voire selon les applications considérées, le choix du type de stockage peut varier, ce qui s'avère problématique lorsqu'un usager se retrouve face à un lecteur de carte qui n'est pas adapté au type de stockage de sa carte et/ou que sa carte n'est pas adaptée à l'application concernée.

L'un des problèmes précités peut être surmonté en équipant la carte à la fois d'une puce électronique et d'une piste magnétique dans lesquelles on stocke de façon redondante les informations nécessaires à l'exécution d'une application. Un autre problème précité peut être surmonté lorsque la carte est équipée de moyens de sélection permettant à son usager de sélectionner une application parmi plusieurs possibles, et ainsi de la configurer via ses moyens de contrôle pour un usage exclusif pour cette application sélectionnée.

Sans de tels moyens de sélection, certaines cartes ne peuvent pas être configurables, ce qui contraint leurs usagers à posséder plusieurs cartes dédiées respectivement à des applications différentes. Par exemple, dans le domaine de la carte bancaire certains usagers sont contraints de posséder une carte dédiée au crédit, une carte dédiée au débit, et une carte dédiée au prépaiement.

Les cartes reconfigurables à deux types de stockage s'avèrent particulièrement utiles. Cependant chaque configuration de carte, induite par la sélection d'une application, nécessite l'alimentation en parallèle de la puce électronique, des moyens d'action, des moyens de contrôle et des moyens de sélection, ce qui consomme beaucoup d'énergie. La puce de la carte doit être alimentée pour contrôler la configuration de la piste magnétique, or la consommation énergétique rend impossible la configuration de l'application, c'est-à-dire à la fois la puce électronique et la piste magnétique. Cela ne poserait pas de problème si la sélection d'une application, et donc la configuration, étaient réalisées après l'introduction de la carte dans un lecteur propre à lui fournir de l'énergie électrique. Hélas, la sélection et la configuration de la piste magnétique ne peuvent se faire qu'avant l'introduction de la carte dans un lecteur et donc exclusivement grâce à la quantité d'énergie qui est stockée dans la batterie, ce qui est notoirement insuffisant pour faire fonctionner le dispositif de mise à jour de la piste magnétique et l'alimentation de la puce électronique.

### Résumé de l'invention

L'invention a donc pour but de résoudre le problème précité à savoir permettre à un usager de sélectionner une application à la fois sur la piste magnétique et sur la puce de la carte.

Elle propose notamment à cet effet un procédé destiné à configurer une carte à puce comprenant une puce électronique propre à participer à au moins deux applications, une piste magnétique propre à stocker des informations, des moyens d'action propres à agir sur la piste magnétique pour modifier certaines informations stockées, un circuit de contrôle propre à contrôler la puce électronique et les moyens d'action, et des moyens de sélection propres à permettre la sélection d'une application. Ce procédé se caractérise par le fait qu'il comprend une étape dans laquelle, en cas de sélection de l'une des applications, Le circuit de contrôle stocke une information dédiée représentative de cette application sélectionnée, de sorte qu'en cas de réveil de la puce électronique cette dernière récupère automatiquement cette information dédiée afin d'activer l'application correspondante.

Le procédé selon l'invention peut comporter d'autres caractéristiques qui peuvent être prises séparément ou en combinaison, et notamment :
- l'information dédiée peut être délivrée de façon permanente par le circuit de contrôle sur au moins une sortie qu'ils comprennent et qui est couplée à une entrée de la puce électronique, de sorte qu'elle puisse être lue par la puce électronique lorsqu'elle est alimentée par l'extérieur ;
- dans une première variante, l'information dédiée peut être stockée par le circuit de contrôle dans une mémoire interne et fournie sur requête par le circuit de contrôle à la puce électronique lorsqu'elle est alimentée par l'extérieur;
- la requête peut émaner de la puce électronique ;
- dans une seconde variante, l'information dédiée peut être stockée par le circuit de contrôle dans une mémoire de la carte à puce qui est externe à ces deux éléments et lisible par la puce électronique lorsqu'elle est alimentée par l'extérieur (cette mémoire externe peut, par exemple, être une mémoire à tore externe à la piste magnétique).

L'invention propose également une carte à puce(s) comprenant une puce électronique propre à participer à au moins deux applications, une piste magnétique propre à stocker des informations , des moyens d'action propres à agir sur la piste magnétique pour modifier certaines informations stockées, un circuit de contrôle propres à contrôler la puce électronique et les moyens d'action, et des moyens de sélection propres à permettre la sélection d'une application.

Cette carte à puce(s) se caractérise par le fait que le circuit de contrôle est en outre agencés, en cas de sélection de l'une des applications (au moyen de ses moyens de sélection) pour provoquer le stockage d'une information dédiée représentative de cette application sélectionnée dans un endroit prédéfini, de sorte qu'en cas de réveil de la puce électronique cette dernière récupère automatiquement cette information dédiée, afin d'activer l'application sélectionnée qu'elle représente. La carte à puce(s) selon l'invention peut comporter d'autres caractéristiques qui peuvent être prises séparément ou en combinaison, et notamment :
- le circuit de contrôle peut être agencé pour délivrer de façon permanente l'information dédiée sur au moins une sortie qu'ils comprennent et qui est couplée à une entrée de la puce électronique, de sorte qu'elle puisse être lue par la puce électronique lorsqu'elle est alimentée par l'extérieur ;
- dans une première variante, le circuit de contrôle peut être agencé pour stocker l'information dédiée dans une mémoire interne et pour fournir cette information dédiée à la puce électronique lorsqu'elle est alimentée par l'extérieur, sur requête ;
- dans une seconde variante, le circuit de contrôle peut être agencé pour contrôler le stockage de l'information dédiée dans une mémoire de la carte à puce qui est externe à ces derniers et lisible par la puce électronique lorsqu'elle est alimentée par l'extérieur.

### Brève description des dessins

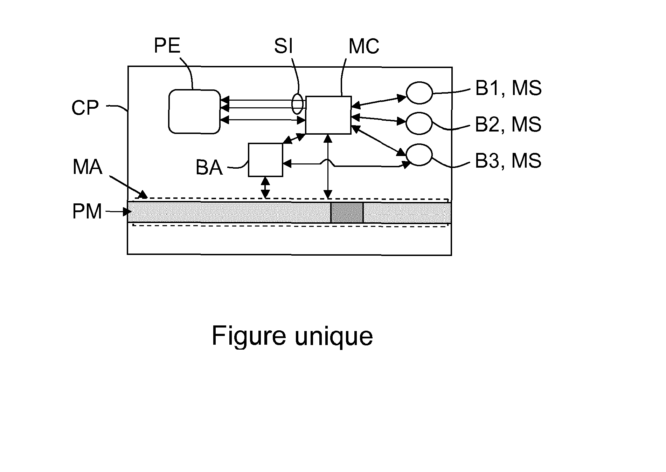

D'autres caractéristiques et avantages de l'invention apparaîtront à l'examen de la description détaillée ci-après, et du dessin annexé, sur lequel l'unique figure illustre de façon schématique et fonctionnelle un exemple de carte à puce équipé d'un dispositif de contrôle selon l'invention.

### Description détaillée

L'invention a notamment pour objet de proposer un procédé, et un dispositif de contrôle D associé, destinés à permettre la configuration d'une carte à puce(s) CP pour qu'elle ne participe qu'à une application sélectionnée parmi plusieurs.

Dans ce qui suit, on considère à titre d'exemple non limitatif que la carte à puce(s) CP est une carte bancaire en matière plastique (ou synthétique). Mais l'invention n'est pas limitée à ce type de carte à puce(s). Elle concerne en effet tout type de carte comportant au moins une puce électronique et au moins une piste magnétique propres à participer à au moins deux applications.

On a schématiquement illustré sur l'unique figure un exemple de carte à puce comprenant une puce électronique PE, une piste magnétique PM, des moyens d'action MA, un circuit de contrôle MC, des moyens de sélection MS et Bi, et une batterie BA.

La batterie BA est agencée de manière à alimenter électriquement, les moyens d'action MA, le circuit de contrôle MC et les moyens de sélection MS.

On notera que la batterie BA, la puce électronique PE, les moyens d'action MA, le circuit de contrôle MC et les moyens de sélection MS peuvent faire partie d'un circuit électronique constituant une partie de la carte à puce CP.

La puce électronique PE est agencée de manière à participer à au moins deux applications (éventuellement de type sécuritaire). Elle est accessible par un lecteur externe (par contact ou sans contact).

La piste magnétique PM est agencée de manière à stocker des informations fixes (à l'instar d'une piste magnétique traditionnelle) et des informations variables (par émulation électronique), notamment relatives aux applications précitées. Elle est accessible par un lecteur magnétique externe. On notera que la rémanence de la partie de la piste magnétique PM qui est chargée de stocker les informations variables (c'est-à-dire la durée pendant laquelle elle peut stocker une même information) peut être plus ou moins grande.

Les moyens d'action MA sont agencés de manière à agir sur la piste magnétique PM afin de modifier des informations variables qu'elle stocke. On notera que les moyens d'action MA peuvent être capables de conserver durablement une dernière information issue du circuit de contrôle MC, et que ces derniers (MC) leur ont éventuellement demandé de stocker dans la partie variable de la piste magnétique PM. On notera également que les moyens d'action MA peuvent être de type électromagnétique pour ce qui concerne leurs éléments chargés d'agir sur la partie variable de la piste magnétique PM. Dans ce cas, ils peuvent, par exemple, comprendre une ou plusieurs micro-bobines.

Les moyens de sélection MS sont agencés de manière à permettre la sélection d'une application par un usager. Ils constituent l'interface utilisateur. Tout moyen de sélection de petites dimensions et dont l'état peut être temporairement modifié par un usager peut être ici utilisé. Ainsi, il pourra par exemple s'agir de boutons Bi actionnables par une simple pression ou bien de zones tactiles ou sensitives. La gestion de tels boutons Bi est assurée par le circuit de contrôle MC alimenté par la batterie BA.

Dans l'exemple non limitatif illustré sur l'unique figure, les moyens de sélection MS comprennent trois boutons Bi (i = 1 à 3) couplés électriquement au circuit de contrôle MC et à la batterie BA. Par exemple, le premier bouton B1 est dédié à la sélection d'une application de débit, le deuxième bouton B2 est dédié à la sélection d'une application de crédit, et le troisième bouton B3 est dédié à la sélection d'une application de prépaiement. Mais dans des variantes de réalisation la carte à puce CP pourrait ne comporter un nombre quelconque de boutons.

On comprendra que l'action d'un usager sur un bouton Bi induit la génération d'un signal (analogique ou numérique) qui est transmis au circuit de contrôle MC en vue de la configuration de la carte à puce CP et de la piste magnétique PM.

Par ailleurs, chaque bouton Bi peut être éventuellement associé à un voyant lumineux destiné à signaler celui qui a été dernièrement utilisé et donc qui désigne la dernière application sélectionnée.

Le circuit de contrôle MC sont notamment agencés de manière à contrôler la puce électronique PE et les moyens d'action MA. Le circuit de contrôle (MC) est également agencés pour intervenir chaque fois que les moyens de sélection MS ont été activés par un usager souhaitant sélectionner une application parmi plusieurs (au moins deux), afin de configurer à cet effet la carte à puce CP.

Plus précisément, selon l'invention, lorsque l'une des applications possibles (ici au nombre de trois) vient d'être sélectionnée, le circuit de contrôle MC sont agencés pour provoquer le stockage d'une information dédiée qui est représentative de l'application sélectionnée dans un endroit prédéfini. Ce stockage est destiné à permettre à la puce électronique PE, après qu'elle ait été réveillée consécutivement à l'introduction de sa carte à puce CP dans un lecteur de cartes (et donc consécutivement à son alimentation par ce dernier), de récupérer automatiquement cette information dédiée afin d'activer l'application sélectionnée qu'elle représente.

Le stockage de l'information étant contrôlé par le circuit de contrôle MC, il se fait donc à un coût énergétique très faible. Il est donc possible d'actionner les moyens d'actions MA afin de reconfigurer la piste magnétique PM. Le circuit de contrôle MC peut déclencher l'écriture de la piste magnétique après la sélection d'un mode de fonctionnement par l'utilisateur. Afin de minimiser la consommation et dans le cas d'une très grande rémanence de la piste magnétique, cette reconfiguration de la piste magnétique PM peut se faire uniquement s'il y a modification de l'information mémorisée.

Par exemple, si l'usager active le premier bouton B1 pour sélectionner l'application de débit, cela provoque l'avertissement du circuit de contrôle MC, et ce dernier (MC) provoque alors le stockage d'une première information dédiée qui est représentative de l'application de débit dans un endroit prédéfini. Plus tard, lorsque la puce électronique PE est réveillée (et donc alimentée) par un lecteur de cartes, elle récupère automatiquement cette première information, éventuellement via le circuit de contrôle MC, afin d'activer l'application sélectionnée qu'elle représente.

On notera qu'une information dédiée peut, par exemple, être définie par un ou plusieurs bits. Un seul bit suffit lorsque le nombre d'applications sélectionnables est égal à deux (2). Dès que ce nombre devient strictement supérieur à deux, chaque information dédiée doit être définie par plusieurs bits. Par exemple lorsque ce nombre est égal à trois (3), comme dans l'exemple ici décrit, chaque information dédiée peut être définie par deux bits.

Plusieurs modes de réalisation peuvent être envisagés pour rendre accessible une information dédiée stockée.

Dans un premier mode de réalisation (illustré non limitativement sur l'unique figure), le circuit de contrôle MC peuvent être agencés pour délivrer de façon permanente l'information dédiée sur au moins une sortie SI qu'ils comprennent et qui est couplée à une entrée de la puce électronique PE, afin qu'elle puisse être lue par la puce électronique PE réveillée (et donc alimentée) par un lecteur de cartes. En d'autres termes, que le circuit de contrôle MC soit dans un état de veille ou dans un état réveillé, il délivre de façon permanente l'information dédiée sur l'une au moins de leurs sorties SI qui les couplent à la puce électronique PE. L'information dédiée est donc en permanence accessible directement à la puce électronique PE, ce qui évite avantageusement d'avoir à réveiller le circuit de contrôle MC pour lui fournir. Ceci peut être réalisé, par exemple, en configurant une sortie du circuit appartenant au circuit de contrôle MC avec une résistance de rappel qui est connectée soit à la masse, soit à l'alimentation.

Par exemple, on peut utiliser deux sorties SI à résistances de type « pull-up » et « pull-down » pour définir des tensions qui représentent l'information dédiée que l'on veut rendre accessible

Dans un deuxième mode de réalisation, le circuit de contrôle MC peut être agencés pour stocker l'information dédiée dans une mémoire interne, par exemple qu'ils comprennent, et pour fournir cette information dédiée à la puce électronique PE réveillée (et donc alimentée) par un lecteur de cartes, sur requête. Ce deuxième mode de réalisation est moins satisfaisant que le premier du fait qu'il nécessite de réveiller le circuit de contrôle MC et donc impose une dépense d'énergie supplémentaire.

La requête peut, par exemple, émaner de la puce électronique PE consécutivement à son réveil par le lecteur de cartes dans lequel a été introduite sa carte à puce CP. Dans ce cas, l'information dédiée est préférentiellement transmise directement à la puce électronique PE par le circuit de contrôle MC via la liaison qui les couple, après avoir été lue dans la mémoire interne du circuit de contrôle MC.

Dans un troisième mode de réalisation, le circuit de contrôle MC peut être agencés pour contrôler le stockage de l'information dédiée dans une mémoire de la carte à puce CP qui est externe au circuit de contrôle MC et lisible par la puce électronique PE réveillée (et donc alimentée) par un lecteur de cartes. Cette mémoire externe peut, par exemple, être une mémoire à tore qui est externe à la piste magnétique PM.

Dans ce troisième mode de réalisation, la requête peut, par exemple, émaner de la puce électronique PE consécutivement à son réveil (et son alimentation) par le lecteur de cartes dans lequel a été introduite sa carte à puce CP. Dans ce cas la puce électronique lira directement cette mémoire externe.

Il est important de noter que l'invention peut être également considérée sous l'angle d'un procédé de configuration pouvant être notamment mis en oeuvre au moyen d'une carte à puce(s) CP du type de celle présentée ci-avant. Les fonctionnalités offertes par la mise en oeuvre du procédé selon l'invention étant sensiblement identiques à celles offertes par la carte à puce(s) CP présentée ci-avant, seule la combinaison de fonctionnalités principales offerte par le procédé est présentée ci-après.

Ce procédé de configuration comprend une étape dans laquelle, en cas de sélection de l'une des applications auxquelles peut participer une carte à puce(s) CP, on stocke une information dédiée qui est représentative de cette application sélectionnée au moyen du circuit de contrôle MC, de sorte qu'en cas de réveil de la puce électronique PE cette dernière (PE) récupère automatiquement cette information dédiée afin d'activer l'application sélectionnée qu'elle représente.

## Revendications

1. Procédé de configuration d'une carte à puce (CP) comprenant une puce électronique (PE) propre à participer à au moins deux applications, une piste magnétique (PM) propre à stocker des informations, des moyens d'action (MA) propres à agir sur ladite piste magnétique (PM) pour modifier certaines informations stockées, un circuit de contrôle (MC) propre à contrôler ladite puce électronique (PE) et lesdits moyens d'action (MA), et des moyens de sélection (MS) propres à permettre la sélection d'une application, **caractérisé en ce qu'il** comprend une étape dans laquelle, en cas de sélection de l'une desdites applications, le circuit de contrôle (MC) stocke une information dédiée représentative de ladite application sélectionnée, de sorte qu'en cas de réveil de ladite puce électronique (PE) cette dernière (PE) récupère automatiquement cette information dédiée afin d'activer ladite application correspondante.

2. Procédé selon la revendication 1, dans lequel ladite information dédiée est délivrée de façon permanente par ledit circuit de contrôle (MC) sur au moins une sortie (SI) qu'ils comprennent et qui est couplée à une entrée de ladite puce électronique (PE), de sorte qu'elle puisse être lue par ladite puce électronique (PE) lorsqu'elle est alimentée par l'extérieur.

3. Procédé selon la revendication 1, dans lequel ladite information dédiée est stockée par ledit circuit de contrôle (MC) dans une mémoire interne et fournie sur requête par ledit circuit de contrôle (MC) à ladite puce électronique (PE) lorsqu'elle est alimentée par l'extérieur.

4. Procédé selon la revendication 3, dans lequel ladite requête émane de ladite puce électronique (PE).

5. Procédé selon la revendication 1, dans lequel ladite information dédiée est stockée par ledit circuit de contrôle (MC) dans une mémoire de ladite carte à puce (CP) qui est externe auxdits circuit de contrôle (MC) et lisible par ladite puce électronique (PE) lorsqu'elle est alimentée par l'extérieur.

6. Procédé selon la revendication 1, dans lequel, après stockage de l'information dédiée représentative, le circuit de contrôle (MC) déclenche les moyens d'action (MA) pour configurer la piste magnétique en fonction de ladite information dédiée représentative.

7. Carte à puce (CP) comprenant une puce électronique (PE) propre à participer à au moins deux applications, une piste magnétique (PM) propre à stocker des informations, des moyens d'action (MA) propres à agir sur ladite piste magnétique (PM) pour modifier certaines informations stockées, des circuit de contrôle (MC) propres à contrôler ladite puce électronique (PE) et lesdits moyens d'action (MA), et des moyens de sélection (MS) propres à permettre la sélection d'une application, **caractérisée en ce que** ledit circuit de contrôle (MC) est agencé, en cas de sélection de l'une desdites applications, pour provoquer le stockage d'une information dédiée représentative de ladite application sélectionnée dans un endroit prédéfini, de sorte qu'en cas de réveil de ladite puce électronique (PE) cette dernière (PE) récupère automatiquement cette information dédiée afin d'activer l'application sélectionnée qu'elle représente.

8. Carte à puce selon la revendication 7, **caractérisée en ce que** le circuit de contrôle (MC) sont agencés pour délivrer de façon permanente ladite information dédiée sur au moins une sortie (SI) qu'ils comprennent et qui est couplée à une entrée de ladite puce électronique (PE), de sorte qu'elle puisse être lue par ladite puce électronique (PE) lorsqu'elle est alimentée par l'extérieur.

9. Carte à puce selon la revendication 7, **caractérisée en ce que** le circuit de contrôle (MC) sont agencés pour stocker ladite information dédiée dans une mémoire interne et pour fournir cette information dédiée à ladite puce électronique (PE) lorsqu'elle est alimentée par l'extérieur, sur requête.

10. Carte à puce selon la revendication 7, **caractérisée en ce que** le circuit de contrôle (MC) sont agencés pour contrôler le stockage de ladite information dédiée dans une mémoire de ladite carte à puce (CP) qui est externe auxdits circuit de contrôle (MC) et lisible par ladite puce électronique (PE) lorsqu'elle est alimentée par l'extérieur.
